# FASCICULE DE BREVET EUROPEEN

(11) **EP 2 929 309 B1**
(45) Date de publication et mention de la délivrance du brevet: **17.08.2016**
(21) Numéro de dépôt: 13808133.6
(22) Date de dépôt: 29.11.2013
(51) Int. Cl.: G01J 3/447, G01J 3/02

(54) **SPECTROMÈTRE POUR L'ANALYSE DU SPECTRE D'UN FAISCEAU LUMINEUX**
SPEKTROMETER ZUR SPEKTRENANALYSE EINES LICHTSTRAHLS
SPECTROMETER FOR ANALYSING THE SPECTRUM OF A LIGHT BEAM

(30) Priorité: 04.12.2012 FR 1261627
(43) Date de publication de la demande: 14.10.2015
(73) Titulaire: Horiba Jobin Yvon S.A.S., 91160 Longjumeau (FR)
(72) Inventeur: ACHER, Olivier, F-91190 Gif-sur-Yvette (FR); RICHARD, Simon, F-91120 Palaiseau (FR)
(74) Mandataire: Jacobacci Coralis Harle
(86) Numéro de dépôt international: PCT/FR2013/052902
(87) Numéro de publication internationale: WO 2014/087083

(56) Documents cités:
- WO-A1-2010/042089
- ELENA NICOLESCU AND MICHAEL J ESCUTI: "Compact spectrophotometer using polarization-independent liquid crystal tunable optical filters", PROCEEDINGS OF SPIE, S P I E - INTERNATIONAL SOCIETY FOR OPTICAL ENGINEERING, US , vol. 6661 1 janvier 2007 (2007-01-01), page 666105, XP007921936, ISSN: 0277-786X, DOI: 10.1117/12.735152 Extrait de l'Internet: URL:http://www.ece.ncsu.edu/oleg/files-wik i/5/56/SPIE07Nicolescu-LCPG_spectrometer.p df

## Description

L'invention concerne le domaine de la métrologie optique.

Elle concerne plus particulièrement un spectromètre à forte efficacité de diffraction pour l'analyse du spectre d'un faisceau lumineux ou d'une source lumineuse quel que soit l'état de polarisation du faisceau lumineux.

La présente invention trouve une application particulièrement avantageuse lorsqu'une haute efficacité du spectromètre sur une large bande spectrale est recherchée.

En métrologie optique, la spectrométrie est une technique qui consiste à analyser le spectre d'un faisceau lumineux amont que celui-ci soit issu directement d'une source de lumière, ou qu'il provienne d'un objet éclairé par une source de lumière pour en déduire certaines propriétés de cette source ou de cet objet.

Un spectromètre est un instrument optique permettant de réaliser une telle analyse pour un spectre comprenant une pluralité de longueurs d'onde.

Il est bien connu de l'homme du métier qu'un spectromètre comporte généralement :
- une fente d'entrée adaptée à laisser traverser le faisceau lumineux amont,
- des moyens de dispersion angulaire adaptés à disperser angulairement un faisceau lumineux incident en fonction d'une pluralité de longueurs d'onde,

Dans de nombreuses applications, comme par exemple la spectroscopie Raman ou la spectroscopie dans le domaine proche infrarouge, la quantité de lumière effectivement disponible à la sortie spectromètre, au niveau de moyens de détection ou d'une fente de sortie, pour l'analyse du spectre est faible. Une mesure rapide ou précise peut alors s'avérer difficile.

Ainsi, un spectromètre, dont les moyens de dispersion angulaire présenteraient une très haute efficacité sur une large bande spectrale, permettrait de transporter avec un minimum de pertes l'ensemble des photons du faisceau lumineux amont depuis la fente d'entrée jusqu'aux moyens de détection ou jusqu'à la fente de sortie. Ceci offrirait une plus grande rapidité et une meilleure précision de mesure du spectromètre pour l'analyse du spectre du faisceau lumineux amont.

On connaît des documents US2010/0225856A1 et US2010/0225876A1 des moyens de dispersion angulaire comprenant au moins un réseau de diffraction à séparation de polarisation présentant une très haute efficacité de diffraction dans les ordres de diffraction +1 et -1 sur une large bande spectrale, notamment dans le domaine des longueurs d'onde ultraviolette, visible et infrarouge.

Les documents US2010/0225856A1 et US2010/0225876A1 enseignent qu'un tel réseau de diffraction à séparation de polarisation diffracte un faisceau lumineux incident, qui présente un état de polarisation quelconque, en un faisceau diffracté dans l'ordre 0, un faisceau diffracté dans l'ordre +1, et / ou un faisceau diffracté dans l'ordre -1.

Selon ces mêmes documents, un réseau de diffraction à séparation de polarisation présente les propriétés suivantes :
- la somme des efficacités de diffraction dans l'ordre de diffraction +1 et dans l'ordre de diffraction -1 est très élevée, typiquement supérieure à 90%, et
- les intensités relatives des faisceaux lumineux diffractés dans l'ordre de diffraction +1 et dans l'ordre de diffraction -1 sont fonction de l'état de polarisation du faisceau lumineux incident, et peuvent varier entre 0% et 100% de l'intensité totale des faisceaux lumineux diffractés dans l'ordre de diffraction +1 et dans l'ordre de diffraction -1 selon l'état de polarisation du faisceau lumineux incident.

En particulier, comme décrit dans le document WO 2010/042089, lorsque le faisceau lumineux incident présente un état de polarisation circulaire, l'efficacité de diffraction dans l'ordre de diffraction +1 ou dans l'ordre de diffraction -1 est proche de 100%.

Cependant, un spectromètre est généralement conçu de telle sorte qu'un seul ordre de diffraction, excepté l'ordre de diffraction 0, est exploité pour l'analyse du faisceau lumineux amont.

Ainsi, un spectromètre utilisant un réseau de diffraction à séparation de polarisation pour analyser le spectre d'un faisceau lumineux amont, peut présenter une efficacité *quasi* nulle selon l'état de polarisation du faisceau lumineux amont et être donc moins avantageux qu'un spectromètre classique utilisant d'autres moyens de dispersion angulaire optimisés afin que l'exploitation de l'ordre de diffraction pour l'analyse du faisceau lumineux amont soit efficace.

Néanmoins, on connaît du document « Compact Spectrophotometer using polarization-independent liquid crystal tunable optical filters » (E. Nicolescu et al., Imaging Spectrometry XII, Proc. of SPIE, Vol. 6661, No. 666105, 2007), un spectrophotomètre peu sensible à l'état de polarisation du faisceau lumineux amont. Cependant, un tel spectromètre, qui comprend une succession de plusieurs réseaux de diffraction à séparation de polarisation, est difficile à mettre en oeuvre.

Afin de remédier à l'inconvénient précité de l'état de la technique, la présente invention propose un spectromètre permettant d'exploiter la très haute efficacité de diffraction d'un réseau de polarisation à séparation de polarisation sur une large bande spectrale.

À cet effet, l'invention concerne un spectromètre pour l'analyse du spectre d'un faisceau lumineux amont tel que défini dans la revendication 1.

Le spectromètre selon l'invention utilise donc de manière combinée un réseau de diffraction à séparation de polarisation avec des moyens de modification de la polarisation du faisceau lumineux amont.

Le réseau de diffraction peut être conçu pour diffracter, avec une très haute efficacité sur une très large bande spectrale, ledit faisceau lumineux redressé en un faisceau lumineux diffracté, soit dans l'ordre de diffraction +1, soit dans l'ordre de diffraction-1, si le faisceau lumineux redressé présente un état de polarisation redressé circulaire bien déterminé.

Les moyens de modification de la polarisation permettent alors, quel que soit l'état de polarisation du faisceau lumineux amont, de préparer l'état de polarisation du faisceau lumineux redressé selon cet état de polarisation redressé circulaire bien déterminé, grâce aux moyens de séparation de la polarisation et aux moyens de redressement de la polarisation.

En effet, quel que soit l'état de polarisation du faisceau lumineux amont, celui-ci est séparé par les moyens de séparation de la polarisation en deux faisceaux lumineux séparés de polarisation orthogonale qui sont chacun traités par les moyens de redressement de la polarisation pour que les deux faisceaux lumineux polarisés redressés présentent le même état de polarisation circulaire que le faisceau lumineux redressé.

Ainsi, le spectromètre selon l'invention permet d'exploiter la très grande efficacité du réseau de diffraction à séparation de polarisation dans un ordre de diffraction déterminé, soit l'ordre +1 ou soit l'ordre -1, et ce quel que soit l'état de polarisation du faisceau lumineux amont.

Avantageusement, l'invention permet d'exploiter la très grande efficacité du réseau de diffraction à séparation de polarisation sur une large bande spectrale.

Par ailleurs, d'autres caractéristiques avantageuses et non limitatives du spectromètre selon l'invention sont énoncées dans les revendications 2 à 12.

Plusieurs modes de réalisation de l'invention sont décrits en détail en référence aux dessins dans lesquels :
- la figure 1 est une vue schématique de moyens de modification de la polarisation;
- la figure 2 est une vue schématique de moyens de modification de la polarisation selon une variante du dispositif de la figure 1 ;
- la figure 3 est une vue schématique de moyens de modification de la polarisation selon une autre variante du dispositif de la figure 1 ;
- la figure 4 est une vue schématique d'un spectromètre selon un premier mode de réalisation dans une configuration de type Czerny-Turner ;
- la figure 5 est une vue schématique d'un spectromètre selon une variante du premier mode de réalisation comprenant une tourelle multi-réseaux ;
- la figure 6 est une vue schématique d'un spectromètre selon un deuxième mode de réalisation ;
- la figure 7 est une vue schématique d'un spectromètre selon un troisième mode de réalisation avec un réseau de diffraction à séparation de polarisation fonctionnant en transmission ;
- la figure 8 est une vue schématique d'un spectromètre selon une variante du troisième mode de réalisation avec un réseau de diffraction à séparation de polarisation placé sur la face inclinée d'un prisme ;
- la figure 9 est une vue schématique d'un double monochromateur comportant deux étages dispersifs en configuration soustractive ;
- la figure 10 est une vue schématique d'un double monochromateur comportant deux étages dispersifs en configuration additive ;
- la figure 11 est une vue schématique d'un triple monochromateur comportant trois étages dispersifs en configuration soustractive ;
- la figure 12 est une vue schématique d'un triple monochromateur comportant trois étages dispersifs en configuration additive.

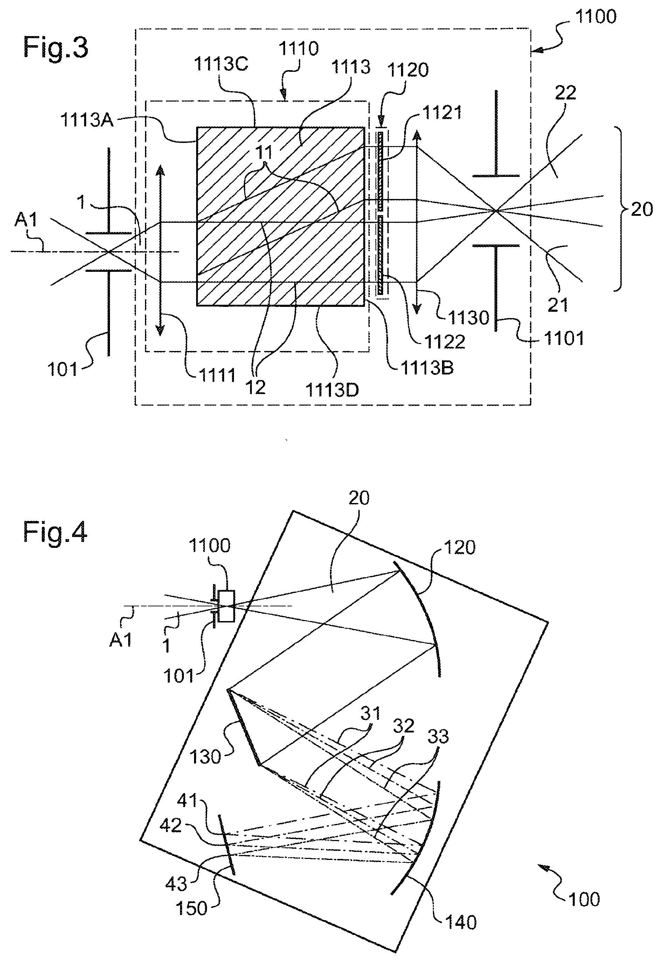

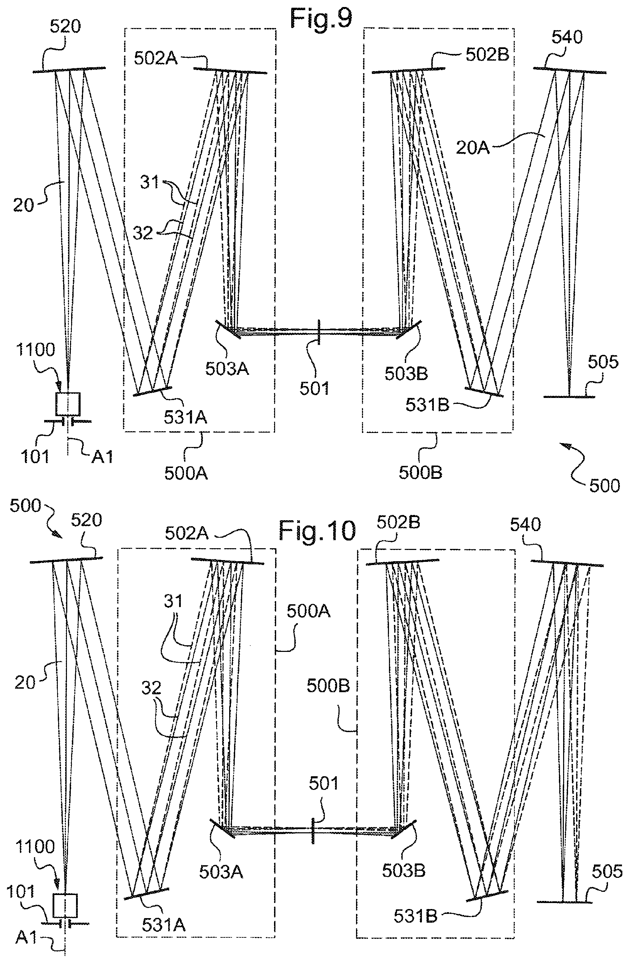

On a représenté sur les figures 4 à 12 différents modes de réalisation d'un spectromètre 100 ; 200 ; 300 ; 500 ; 600 selon l'invention qui sont, destinés soit à analyser le spectre d'un faisceau lumineux amont 1 (cas des modes de réalisation représentés sur les figures 4 à 8), soit à sélectionner une partie du spectre d'un faisceau lumineux amont 1 (cas des modes de réalisation représentés sur les figures 9 à 12). Dans ce deuxième cas, on parle alors communément de « *monochromateurs ».*

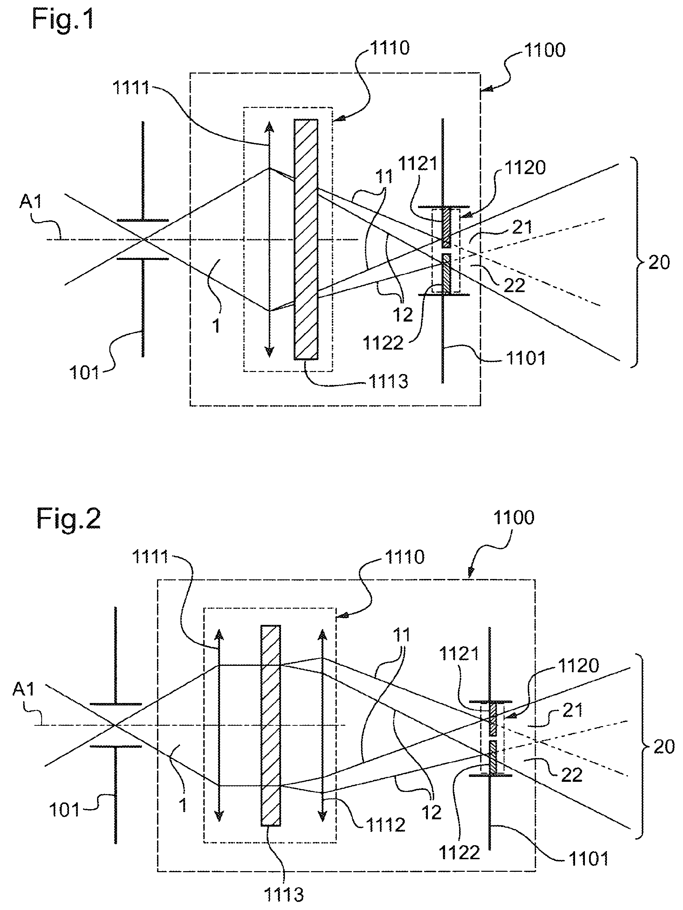

Sans limitation, on considérera dans les figures 1 à 12 que le faisceau lumineux amont 1 est non polarisé, c'est-à-dire présente un état de polarisation quelconque. En effet, sans connaissance *a priori* de l'état de polarisation du faisceau lumineux amont 1, ce cas est le moins restrictif. On comprendra d'ailleurs à la lumière des exemples, l'intérêt de l'invention vis-à-vis de cette méconnaissance *a priori* de l'état de polarisation du faisceau lumineux amont 1.

De manière générale, et comme cela est bien représenté sur les figures 4 à 12, les différents modes de réalisation d'un spectromètre 100 ; 200 ; 300 ; 500 ; 600 selon l'invention comprend tout d'abord une fente d'entrée 101.

La fente d'entrée 101 est ici une fente plane de forme rectangulaire, centrée sur un axe optique A1 qui est perpendiculaire au plan de la fente d'entrée 101.

On considérera dans les différents modes de réalisation que le faisceau lumineux amont 1 est un faisceau lumineux divergent formé d'un cône de rayons lumineux, le cône étant de révolution autour de l'axe optique A1 et ayant pour sommet le centre de la fente d'entrée 101.

Ainsi disposée, la fente d'entrée 101 laisse traverser le faisceau lumineux amont 1.

Selon l'invention, les différents modes de réalisation d'un spectromètre 100 ; 200 ; 300 ; 500 ; 600 représentés sur les figures 4 à 12 comportent des moyens de modification de la polarisation 1100 qui seront décrits en détail ci-après en regard des exemples représentés sur les figures 1 à 3.

Ces moyens de modification de la polarisation 1100 acceptent, en entrée, le faisceau lumineux amont 1 qui a traversé la fente d'entrée 101 et génèrent, en sortie, un faisceau lumineux redressé 20 qui est également un faisceau lumineux divergent.

Ces moyens de modification de la polarisation 1100 sont disposés entre la fente d'entrée 101, en aval de celle-ci, et différents éléments optiques du spectromètre 100 ; 200 ; 300 ; 500 ; 600, ces éléments comprenant notamment des moyens de dispersion angulaire, qui sont fixes ou pouvant être animés d'un mouvement de rotation.

Dans les modes de réalisation particuliers du spectromètre 100 ; 500 ; 600 représentés sur les figures 4, 5 et 9 à 12, les moyens de dispersion angulaire comprennent en particulier au moins un réseau de diffraction à séparation de polarisation 130, 231 ; 531A qui est plan et fonctionne en réflexion.

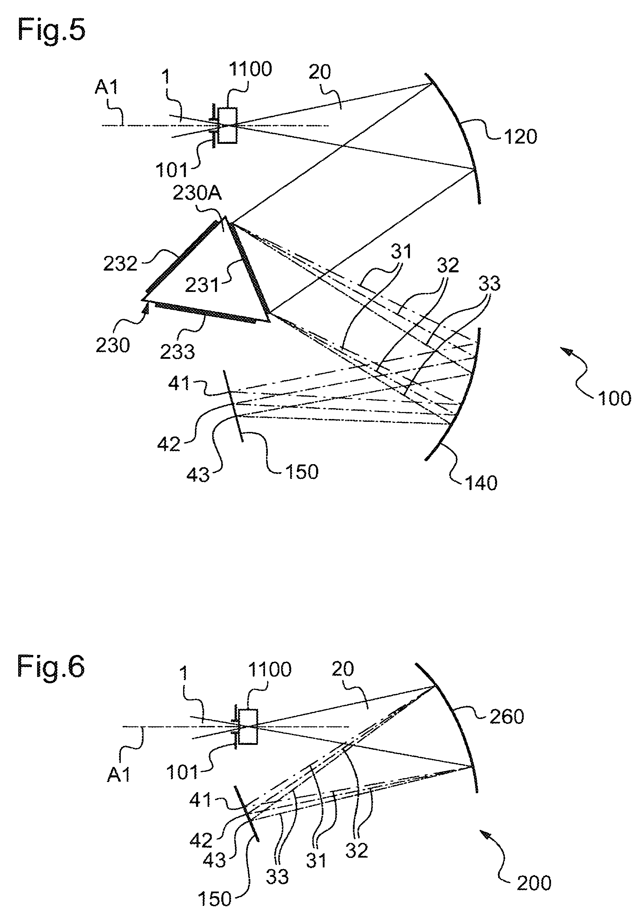

Dans un autre mode de réalisation particulier du spectromètre 200 représenté sur la figure 6, les moyens de dispersion angulaire comprennent un réseau de diffraction à séparation de polarisation 260 qui est de forme concave et fonctionne en réflexion.

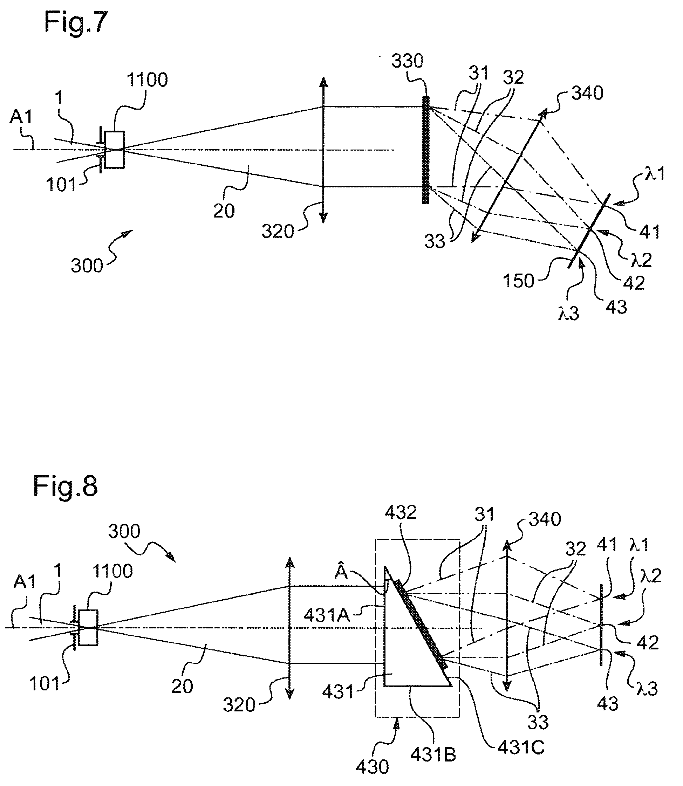

Dans un dernier mode de réalisation particulier du spectromètre 300 représenté sur les figure 7 et 8, les moyens de dispersion angulaire comprennent au moins un réseau de diffraction à séparation de polarisation 330, 432 qui est plan et fonctionne en transmission.

Les moyens de dispersion angulaire interceptent le faisceau lumineux redressé 20 en polarisation.

Les moyens de dispersion angulaire dispersent alors angulairement le faisceau lumineux redressé 20 en fonction de la longueur d'onde.

Par souci de simplification et pour illustrer les exemples de l'invention, on considérera dans la suite de la description une, deux ou trois longueurs d'onde particulières du spectre du faisceau lumineux amont 1 pour lesquelles l'intensité lumineuse est non nulle.

On notera ces trois longueurs d'onde particulières λ1, λ2, et λ3.

Cette considération n'est en rien limitative et ne présume pas ni de la nature précise du spectre du faisceau lumineux amont 1, qui peut être par exemple un spectre continu, discret, à bandes, à raies ou un mélange de tous ces types de spectre, ni de son étendue spectrale.

On entend par là que les moyens de dispersion angulaire génèrent, à partir du faisceau lumineux redressé 20 aux longueurs d'onde λ1, λ2, et λ3 :
- un faisceau lumineux diffracté 31 à la longueur d'onde λ1, et
- un faisceau lumineux diffracté 32 à la longueur d'onde λ2 qui est séparé angulairement du faisceau lumineux diffracté 31 à la longueur d'onde λ1.
- un faisceau lumineux diffracté 33 à la longueur d'onde λ3 qui est séparé angulairement du faisceau lumineux diffracté 31 à la longueur d'onde λ1 et du faisceau lumineux diffracté 32 à la longueur d'onde λ2.

Dans certains modes de réalisation particuliers de l'invention représentés sur les figures 4, 5, et 7 à 12, le spectromètre 100 ; 300 ; 500 ; 600 comporte en outre des moyens de collimation 120 ; 320 ; 520 qui transforment le faisceau lumineux redressé 20 en un faisceau lumineux parallèle de telle sorte que tous les rayons lumineux du faisceau lumineux redressé 20 sont parallèles en aval des moyens de collimation 120 ; 320 et incidents sur le réseau de diffraction à séparation de polarisation plan 130, 231 ; 330, 432 ; 531A avec la même incidence.

Dans les différents modes de réalisation de l'invention représentés sur les figures 4 à 12. le spectromètre 100 ; 200; 300; 500; 600 comporte des moyens de focalisation 140 ; 260 ; 340 ; 540.

Les moyens de focalisation 140 ; 260 ; 340 ; 540, qui sont placés sur les chemins optiques des faisceaux lumineux diffractés 31, 32, 33, focalisent, respectivement pour chaque longueur d'onde λ1, λ2, λ3, les faisceaux lumineux diffractés 31, 32, 33 dans un plan image.

Dans les modes de réalisation particuliers de l'invention représentés sur les figures 9 à 12, les faisceaux lumineux diffractés 31, 32 sont focalisés sur un plan image 505, 605 soit au même point de focalisation du plan image 505 (cas de la figure 9), soit en des points de focalisation séparés du plan image 505 ; 605 (cas des figures 10 à 12),

Dans les modes de réalisation particuliers de l'invention représentés sur les figures 4 à 8, le plan image est destiné à recevoir des moyens de détection 150.

Comme cela est bien représenté sur les figures 4 à 8, les trois faisceaux lumineux diffractés 31, 32, 33 sont alors focalisés sur le plan image en trois points de focalisation 41, 42, 43 séparés spatialement les uns des autres en fonction de la longueur d'onde λ1, λ2, λ3.

Les moyens de détection 150 sont sensibles aux intensités lumineuses des faisceaux lumineux diffractés 31, 32, 33 focalisés aux points de focalisation 41, 42, 43 et mesurent alors les intensités lumineuses des faisceaux lumineux diffractés 31, 32, 33 pour chaque longueur d'onde λ1, λ2, λ3.

Les moyens de détection 150 délivrent ainsi un signal représentatif du spectre dudit faisceau lumineux amont 1 qui peut être ensuite analysé.

Les différents éléments précités du spectromètre 100 ; 300 sont inclus dans un bâti (non représenté) opaque à la lumière extérieure, la fente d'entrée 101 étant située sur l'une des parois de ce bâti.

On va maintenant décrire les moyens de modification de la polarisation 1100, en regard des figures 1 à 3 sur lesquelles des exemples de moyens de modification de la polarisation ont été représentés.

Les moyens de modification de la polarisation 1100 modifient, pour la pluralité de longueurs d'onde λ1, λ2, λ3, l'état de polarisation du faisceau lumineux amont 1 et génèrent le faisceau lumineux redressé 20 qui, on va le voir en lien avec les figures 1 et 2, présente un état de polarisation redressé qui est circulaire.

À cet effet, les moyens de modification de la polarisation 1100 comprennent tout d'abord des moyens de séparation de la polarisation 1110.

Comme le montrent bien les figures 1 à 3, ces moyens de séparation de la polarisation 1110 sont placés en aval de la fente d'entrée 101 du spectromètre 100 ; 200 ; 300 ; 500 ; 600, le long du chemin optique du faisceau lumineux amont 1 pour intercepter celui-ci.

Les moyens de séparation de la polarisation 1110 génèrent, pour chaque longueur d'onde λ1, λ2, λ3, à partir du faisceau lumineux amont 1 un premier faisceau lumineux séparé 11 et un deuxième faisceau lumineux séparé 12 qui présentent des états de polarisation orthogonaux entre eux.

Les moyens de modification de la polarisation 1100 comprennent par ailleurs des moyens de redressement de la polarisation 1120 placés en aval des moyens de séparation de la polarisation 1110 le long des chemins optiques du premier faisceau lumineux séparé 11 et du deuxième faisceau lumineux séparé 12 qui sont focalisés sur les moyens de redressement de la polarisation 1120 par les moyens de séparation de la polarisation 1110.

Les moyens de redressement de la polarisation 1120 génèrent alors en sortie, pour chaque longueur d'onde λ1, λ2, λ3 :
- un premier faisceau lumineux polarisé redressé 21 à partir du premier faisceau lumineux séparé 11, et
- un deuxième faisceau lumineux polarisé redressé 22 à partir du deuxième faisceau lumineux séparé 12.

Selon l'invention, le premier faisceau lumineux polarisé redressé 21 et le deuxième faisceau lumineux polarisé redressé 22 présentent un même état de polarisation qui est un état de polarisation circulaire et forment par superposition un faisceau lumineux redressé 20 en sortie des moyens de redressement de la polarisation 1120.

Ainsi, l'état de polarisation redressé du faisceau lumineux redressé 20 est identique à l'état de polarisation circulaire du premier faisceau lumineux polarisé redressé 21 et du deuxième faisceau lumineux polarisé redressé 22.

On va décrire ci-après (voir exemples des figures 1 à 3) comment les moyens de séparation de la polarisation 1110 génèrent le premier faisceau lumineux séparé 11 et le deuxième faisceau lumineux séparé 12 et comment les moyens de redressement de la polarisation 1120 génèrent le faisceau lumineux redressé 20 dont l'état de polarisation redressé est circulaire.

De manière préférée dans ces trois exemples, les moyens de redressement de la polarisation 1120 comprennent un premier composant optique redresseur de la polarisation 1121 et un deuxième composant optique redresseur de la polarisation 1122.

Le premier composant optique redresseur de la polarisation 1121 et le deuxième composant optique redresseur de la polarisation 1122 sont ici des composants plans, situés l'un à côté de l'autre.

Dans les deux premiers exemples des figures 1 et 2, les moyens de redressement de la polarisation 1120 sont situés dans le plan d'une fente de sortie 1101 qui est centrée sur l'axe optique A1.

Cette fente de sortie 1101 est soit réelle, c'est-à-dire matérialisée au moyen d'une ouverture physique dans un capot des moyens de modification de la polarisation 1100 ; soit virtuelle, c'est-à-dire qu'elle correspond à l'image de la fente d'entrée 101 au travers des moyens de séparation de la polarisation 1110.

Dans le troisième exemple, les moyens de redressement de la polarisation 1120 sont situés juste après les moyens de séparation de la polarisation 1110 (voir détails ci-après).

Le premier composant optique redresseur de la polarisation 1121 est disposé pour recevoir ledit premier faisceau lumineux séparé 11 et génère, pour chaque longueur d'onde λ1, λ2, λ3, le premier faisceau lumineux polarisé redressé 21; respectivement le deuxième composant optique redresseur de la polarisation 1122 est disposé pour recevoir ledit deuxième faisceau lumineux séparé 12 et génère, pour chaque longueur d'onde λ1, λ2, λ3, le deuxième faisceau lumineux polarisé redressé 22.

Selon le premier exemple illustré sur la figure 1, les moyens de séparation de la polarisation 1110 comprennent un premier système optique 1111 comprenant ici une lentille convergente réfractant le faisceau lumineux amont 1 divergent.

En sortie de la lentille convergente 1111, le faisceau lumineux amont 1 est dirigé vers un composant optique séparateur de polarisation 1113.

Dans ce premier exemple, ce composant optique séparateur de polarisation 1113 comprend un prisme de Wollaston.

Il est bien connu qu'un prisme de Wollaston est en fait un parallélépipède formé de deux prismes, ce parallélépipède ayant la particularité de séparer un rayon lumineux incident de polarisation quelconque en deux rayons lumineux qui sont séparés angulairement et qui présentent des états de polarisation linéaires et orthogonaux entre eux.

Ainsi, le prisme de Wollaston 1113 génère à partir du faisceau lumineux amont 1, à chaque longueur d'onde λ1, λ2, λ3 :
- le premier faisceau lumineux séparé 11 selon un état de polarisation linéaire, et
- le deuxième faisceau lumineux séparé 12 selon un état de polarisation linéaire orthogonal à l'état de polarisation du premier faisceau lumineux séparé 11.

En variante, le composant optique séparateur de polarisation pourrait par exemple comprendre un prisme de Rochon, un prisme de Sénarmont.

En variante encore, dans ce premier exemple, le composant optique séparateur de polarisation pourrait par exemple comprendre un réseau de diffraction à séparation de polarisation.

Dans la configuration du premier exemple de la figure 1 où le composant optique séparateur de polarisation 1113 comprend un prisme de Wollaston, le premier composant optique redresseur de la polarisation 1121 comprend une première lame à retard quart d'onde et le deuxième composant optique redresseur de la polarisation 1122 comprend une deuxième lame à retard quart d'onde.

Les deux lames à retard 1121, 1122 sont des lames uniaxes réalisées dans un cristal biréfringent.

De manière classique, la première lame à retard 1121 présente ainsi premier axe lent et la deuxième lame à retard 1122 présente un second axe lent.

Il est bien connu en optique qu'une lame à retard quart d'onde transforme une polarisation linéaire formant un angle de 45° avec l'axe lent de la lame à retard en une polarisation circulaire, le sens de la polarisation circulaire étant obtenu en amenant la polarisation linéaire sur l'axe lent de la lame quart d'onde.

La première lame à retard 1121 est disposée relativement au prisme de Wollaston 1113 de manière à ce que le premier axe lent de la première lame à retard 1121 forme un angle de 45° avec l'axe de polarisation linéaire du premier faisceau lumineux séparé 11.

La deuxième lame à retard 1122 est orientée par rapport à la première lame à retard 1121 de sorte que le deuxième axe lent soit orthogonal au premier axe lent.

Ainsi orientée, la deuxième lame à retard 1122 est disposée relativement au prisme de Wollaston 1113 de sorte que le deuxième axe lent de la deuxième lame à retard 1122 forme également un même angle de 45° avec l'axe de polarisation linéaire du deuxième faisceau lumineux séparé 12, l'axe de polarisation linéaire du deuxième faisceau lumineux séparé 12 étant orthogonal à l'axe de polarisation linéaire du premier faisceau lumineux séparé 11.

On comprend donc que :
- le premier faisceau lumineux polarisé redressé 21, qui est généré par transmission du premier faisceau lumineux séparé 11 présentant un état de polarisation linéaire au travers de la première lame à retard 1121 quart d'onde, présente en sortie de ladite lame à retard un état de polarisation circulaire, et
- le deuxième faisceau lumineux polarisé redressé 22, qui est généré par transmission du deuxième faisceau lumineux séparé 12 présentant un état de polarisation linéaire au travers de la deuxième lame à retard 1122 quart d'onde, présente en sortie de ladite lame à retard un état de polarisation circulaire.

De plus, comme le premier faisceau lumineux séparé 11 présente un état de polarisation linéaire orthogonal à l'état de polarisation du deuxième faisceau lumineux séparé 12, et comme le premier axe lent est orthogonal au deuxième axe lent, les états de polarisation circulaires du premier faisceau lumineux polarisé redressé 21 et du deuxième faisceau lumineux polarisé redressé 22 sont identiques.

Ainsi, comme expliqué précédemment, le faisceau lumineux redressé 20, qui est formé du premier faisceau lumineux polarisé redressé 21 et du deuxième faisceau lumineux polarisé redressé 22, présente un état de polarisation circulaire.

Selon un deuxième exemple illustré sur la figure 2, les moyens de séparation de la polarisation 1110 comprennent également un premier système optique 1111 comprenant ici une lentille convergente réfractant le faisceau lumineux amont 1 divergent.

Cette lentille convergente 1111 dont l'axe optique est confondu avec l'axe optique A1 est disposée le long de cet axe optique A1 par rapport à la fente d'entrée 101 de manière à ce que le faisceau lumineux amont 1 soit collimaté, c'est-à-dire que les rayons lumineux du faisceau lumineux amont 1 soient tous parallèles entre eux à la sortie de la lentille convergente 1111.

En sortie de la lentille convergente 1111, le faisceau lumineux amont 1 est alors dirigé vers un composant optique séparateur de polarisation 1113 de sorte que le faisceau lumineux amont 1 est ici en incidence normale sur ce composant optique séparateur de polarisation 1113.

Dans ce deuxième exemple, le composant optique séparateur de polarisation 1113 comprend ici un autre réseau de diffraction à séparation de polarisation.

En variante, dans ce deuxième exemple, le composant optique séparateur de polarisation pourrait par exemple comprendre un prisme de Wollaston, un prisme de Rochon, un prisme de Sénarmont.

De manière générale, un réseau de diffraction diffracte un faisceau lumineux incident en un ou plusieurs faisceaux diffractés se propageant dans des directions différentes, c'est-à-dire que les faisceaux diffractés sont séparés angulairement.

En référence à la loi des réseaux de diffraction, on parle alors d'ordres de diffraction tels que l'ordre 0 et les ordres supérieurs : ordres ±1, ordres ±2, *etc...*

Un réseau de diffraction à séparation de polarisation est généralement un composant holographique plan formé d'au moins une lame d'onde diffractive (« *diffractive waveplate »* en anglais) à cristaux liquides.

Un réseau de diffraction à séparation de polarisation présente la particularité de diffracter un faisceau lumineux incident en au moins un faisceau diffracté dans l'ordre de diffraction +1 et un faisceau diffracté dans l'ordre de diffraction -1, les deux faisceaux diffractés étant polarisés circulairement et orthogonalement. Par exemple, si le faisceau diffracté dans l'ordre de diffraction +1 est polarisé circulairement à gauche, alors le faisceau diffracté dans l'ordre de diffraction -1 est polarisé circulairement à droite, ou *vice versa.*

Cette particularité existe que le faisceau lumineux incident soit non polarisé ou polarisé de manière quelconque. En effet, l'état de polarisation du faisceau lumineux incident ne régit que la répartition de l'énergie lumineuse dans l'ordre de diffraction +1 et dans l'ordre de diffraction +1.

L'autre réseau de diffraction à séparation de polarisation 1113 est conçu pour fonctionner sur une bande spectrale couvrant au moins le spectre du faisceau lumineux amont 1, de telle sorte qu'il présente des efficacités de diffraction dans l'ordre de diffraction +1 et dans l'ordre de diffraction -1 telles que leur somme soit la plus proche possible de 100%, typiquement supérieure ou égale à 90%, ou, de préférence, supérieure ou égale à 95%.

De cette manière, la diffraction du faisceau lumineux amont 1 par l'autre réseau de diffraction à séparation de polarisation 1113 se fait avec une très haute efficacité, quelle que soit l'état de polarisation du faisceau lumineux amont 1.

La somme des efficacités de diffraction dans l'ordre de diffraction +1 et dans l'ordre de diffraction -1 ne peut être égale à 100%. En effet, non seulement une partie de la lumière incidente sur un réseau de diffraction à séparation de polarisation n'est pas diffractée - elle est soit rétroréfléchie, soit absorbée, soit diffusée -, mais aussi une partie de la lumière incidente sur un réseau de diffraction à séparation de polarisation est diffractée dans l'ordre de diffraction 0.

Disposé en aval de la lentille convergente 1111, l'autre réseau de diffraction à séparation de polarisation 1113 diffracte, pour chaque longueur d'onde λ1, λ2, λ3 le faisceau lumineux amont 1 en :
- le premier faisceau lumineux séparé 11 qui est diffracté dans un premier ordre de diffraction, ici l'ordre de diffraction +1 de l'autre réseau de diffraction à séparation de polarisation 1113, et qui présente un premier état de polarisation circulaire, ici une polarisation circulaire gauche, et en
- le deuxième faisceau lumineux séparé 12 qui est diffracté dans un deuxième ordre de diffraction, ici l'ordre de diffraction -1 de l'autre réseau de diffraction à séparation de polarisation 1113, et qui présente un deuxième état de polarisation circulaire, ici une polarisation circulaire droite, ce deuxième état de polarisation étant orthogonal au premier état de polarisation.

Dans ce deuxième exemple, les moyens de séparation de la polarisation 1110 comprennent également un deuxième système optique 1112; formé ici par une deuxième lentille convergente ayant un axe optique confondu avec l'axe optique A1.

Cette deuxième lentille convergente 1112 s'interpose entre l'autre réseau de diffraction à séparation de polarisation 1113 et les moyens de redressement de la polarisation 1120, le long des chemins optiques du premier faisceau lumineux séparé 11 et du deuxième faisceau lumineux séparé 12, pour les intercepter.

Comme cela est bien représenté sur la figure 2, la deuxième lentille convergente 1112 focalise alors pour chaque longueur d'onde λ1, λ2, λ3 :
- le premier faisceau lumineux séparé 11 sur le premier composant optique redresseur de la polarisation 1121, et
- le deuxième faisceau lumineux séparé 12 sur le deuxième composant optique redresseur de la polarisation 1122.

Dans la configuration du deuxième exemple de la figure 2 où le composant optique séparateur de polarisation 1113 comprend un autre réseau de diffraction à séparation de polarisation, le premier composant optique redresseur de la polarisation 1121 comprend une première lame à retard demi-onde et le deuxième composant optique redresseur de la polarisation 1122 comprend une lame neutre à faces parallèles.

Il est bien connu en optique qu'une lame à retard demi-onde transforme, ou « inverse », une polarisation circulaire en une polarisation circulaire orthogonale, c'est-à-dire qu'une polarisation circulaire gauche est inversée en une polarisation circulaire droite, et *vice versa.*

Par ailleurs, on entendra ici qu'une lame neutre à faces parallèles est une lame transparente qui ne modifie pas l'état de polarisation d'un faisceau lumineux la traversant.

On comprend donc que :
- le premier faisceau lumineux polarisé redressé 21, qui est généré par transmission du premier faisceau lumineux séparé 11 présentant un état de polarisation circulaire gauche au travers de la lame demi-onde 1121, présente en sortie de ladite lame demi-onde un état de polarisation circulaire droite, et
- le deuxième faisceau lumineux polarisé redressé 22, qui est généré par transmission du deuxième faisceau lumineux séparé 12 présentant un état de polarisation circulaire droite au travers de la lame neutre 1122 quart d'onde, présente en sortie de ladite lame neutre un état de polarisation circulaire droite.

Ainsi, comme expliqué précédemment, le faisceau lumineux redressé 20, qui est formé de la superposition du premier faisceau lumineux polarisé redressé 21 et du deuxième faisceau lumineux polarisé redressé 22, présente un état de polarisation circulaire, qui est ici droite.

Selon un troisième exemple illustré sur la figure 3, les moyens de séparation de la polarisation 1110 comprennent, outre le premier système optique 1111 similaire au premier exemple, un composant optique séparateur de polarisation 1113 qui comporte un prisme à décalage de faisceau (« *beam displacer prism* » en anglais).

Ce prisme à décalage de faisceau 1113 est ici formé d'un cristal biréfringent de calcite, de forme parallélépipédique et droit, présentant une face d'entrée 1113A, une face de sortie 1113B, une face supérieure 1113C et une face inférieure 1113D parallèle à la face supérieure 1113C.

La face d'entrée 1113A et la face de sortie 1113B sont parallèles et taillées de telle sorte que l'axe optique du cristal forme un angle de 45° avec la face d'entrée 1113A dans un plan parallèle à la face supérieure 1113C et à la face inférieure 1113D.

Le prisme à décalage de faisceau 1113 sépare le faisceau lumineux amont 1, qui est collimaté en incidence normale sur la face d'entrée 1113A du prisme à décalage de faisceau 1113 par la lentille convergente 1111, en le premier faisceau lumineux séparé 11 qui est dévié par rapport au faisceau lumineux amont 1 et en le deuxième faisceau lumineux séparé 12 qui n'est pas dévié par rapport au faisceau lumineux amont 1.

Par réfraction sur la face de sortie 1113B du prisme à décalage de faisceau 1113, le premier faisceau lumineux séparé 11 et le deuxième faisceau lumineux séparé 12 émergent du prisme à décalage de faisceau 1113 pour former deux faisceaux lumineux collimatés qui se propagent parallèlement l'un à l'autre et dans la même direction que le faisceau lumineux amont 1.

Par propagation dans le prisme à décalage de faisceau 1113, le premier faisceau lumineux séparé 11 et le deuxième faisceau lumineux séparé 12 sont décalés et ne se superposent pas en sortie du prisme à décalage de faisceau 1113.

La dimension du prisme à décalage de faisceau 1113 le long de l'axe optique A1 peut être ajustée de sorte que le décalage entre le premier faisceau lumineux séparé 11 et le deuxième faisceau lumineux séparé 12 soit suffisant pour que le premier faisceau lumineux séparé 11 et le deuxième faisceau lumineux séparé 12 ne se superposent pas en sortie du prisme à décalage de faisceau 1113.

On prévoira ainsi une dimension minimale du prisme à décalage de faisceau 1113 le long de l'axe optique A1.

En sortie du prisme à décalage de faisceau 1113, le premier faisceau lumineux séparé 11 et le deuxième faisceau lumineux séparé 12 présentent des états de polarisation linéaires, qui sont orthogonaux l'un à l'autre.

Ainsi, les moyens de redressement de la polarisation 1120 sont identiques à ceux du premier exemple illustré sur la figure 1 et comprennent deux lames quart d'onde 1121, 1122 orientées de telle sorte que les faisceaux lumineux polarisés redressés 21, 22 présentent un état de polarisation circulaire identique.

Ces faisceaux lumineux polarisés redressés 21, 22 sont ensuite focalisés sur la fente de sortie 1101 grâce à une lentille de focalisation 1130, pour former le faisceau lumineux redressé 20.

On vient ainsi de décrire comment le spectromètre 100 ; 200 ; 300 ; 500 ; 600 selon l'invention permet de générer, pour chaque longueur d'onde λ1, λ2, λ3, à partir du faisceau lumineux amont 1 qui présente a *priori* un état de polarisation quelconque, un faisceau lumineux redressé 20 qui présente un état de polarisation circulaire.

Sans limitation, on considérera dans la suite de la description que le faisceau lumineux redressé 20 présente un état de polarisation circulaire qui est droite.

On va désormais comprendre l'avantage d'une telle préparation de l'état de polarisation du faisceau lumineux redressé 20 à la lumière de la description des moyens de dispersion angulaire 130 ; 230 ; 330 ; 430 du spectromètre 100 ; 300 selon l'invention.

En effet, toujours selon l'invention, les moyens de dispersion angulaire 130 ; 230 ; 330 ; 430 comprennent au moins un réseau de diffraction à séparation de polarisation 130 ; 231, 232, 233 ; 330 ; 432.

Ce réseau de diffraction à séparation de polarisation 130 ; 231, 232, 233 ; 330 ; 432 peut être du même type que l'autre réseau de diffraction à séparation de polarisation 1113 de la figure 2.

De préférence, le réseau de diffraction à séparation de polarisation 130 ; 231, 232, 233 ; 330 ; 432 est conçu de telle sorte qu'il présente une efficacité de diffraction très élevée, supérieure à 90%, mieux supérieure à 95% sur l'ensemble du spectre du faisceau lumineux amont 1, dans un seul et unique ordre de diffraction particulier, qui peut être soit l'ordre de diffraction +1, soit l'ordre de diffraction -1, lorsque le faisceau lumineux redressé 20 présente un état de polarisation prédéterminé qui est circulaire. Le faisceau lumineux diffracté dans l'ordre de diffraction particulier par le réseau ainsi conçu présente alors :
- un état de polarisation circulaire identique à l'état de polarisation du faisceau lumineux redressé 20 lorsque ce réseau fonctionne en réflexion, et
- un état de polarisation circulaire inversé lorsque ce réseau fonctionne en transmission.

Sans limitation, on considérera ici que le réseau de diffraction à séparation de polarisation 130 ; 231, 232, 233 ; 330 ; 432 est conçu de telle sorte que l'ordre de diffraction particulier corresponde à l'ordre de diffraction +1, le faisceau lumineux diffracté dans l'ordre de diffraction +1 étant polarisé selon un état de polarisation prédéterminé qui est circulaire gauche.

Par ailleurs, dans le spectromètre 100 ; 300 selon l'invention, les moyens de dispersion angulaire 130 ; 230 ; 330 ; 430 fonctionnant en combinaison avec les moyens de modification de la polarisation 1100, ces derniers sont donc configurés de telle sorte que l'état de polarisation redressé du faisceau lumineux redressé 20 corresponde à l'état de polarisation prédéterminé pour lequel le réseau de diffraction à séparation de polarisation 130 ; 231, 232, 233 ; 330 ; 432 est le plus efficace dans l'ordre de diffraction particulier +1, dans l'exemple considéré ci-dessus.

Ainsi, on comprendra que le réseau de diffraction à séparation de polarisation 130 ; 231, 232, 233 ; 330 ; 432 des moyens de dispersion angulaire 130 ; 230 ; 330 ; 430 diffracte avec une très grande efficacité pour chaque longueur d'onde λ1, λ2, λ3 le faisceau lumineux redressé 20 qui présente un état de polarisation circulaire gauche, en des faisceaux lumineux diffractés auxdites longueurs d'onde dans l'ordre de diffraction +1.

Plus précisément, le réseau de diffraction à séparation de polarisation 130 ; 231, 232, 233 ; 330 ; 432 diffracte le faisceau lumineux redressé 20 en :
- le faisceau lumineux diffracté 31 à la longueur d'onde λ1,
- le faisceau lumineux diffracté 32 à la longueur d'onde λ2, et
- le faisceau lumineux diffracté 33 à la longueur d'onde λ3.

Comme expliqué plus haut, ces faisceaux lumineux diffractés 31, 32, 33 sont alors exploités par les moyens de focalisation 140 ; 340 et les moyens de détection 150 afin que le spectromètre 100 ; 300 puisse analyser le spectre du faisceau lumineux amont 1.

On décrira plus en détail ci-après les différents modes de réalisation de l'invention précédemment décrite, dans lesquels les moyens de modification de la polarisation peuvent être indifféremment ceux du premier exemple de la figure 1 ou ceux du deuxième exemple de la figure 2.

### Premier mode de réalisation d'un spectromètre

On a représenté sur la figure 3 un spectromètre 100 selon un premier mode de réalisation de l'invention.

Ce spectromètre 100 est un type de spectromètre bien connu, dit de *« Czemy-Turner ».*

En variante, le spectromètre 100 pourrait par exemple être de type *« Ebert-Fastie », « Monk-Gillieson »*, ou *« Littrow ».*

Dans cette configuration, les moyens de collimation 120 comprennent un premier miroir concave sphérique dont le plan focal est situé dans le plan de la fente de sortie 1101 des moyens de modification de la polarisation 1100.

Ainsi disposé, le premier miroir concave 120 collimate le faisceau lumineux redressé 20 sur le réseau de diffraction à séparation de polarisation 130 du spectromètre 100 qui fonctionne en réflexion.

Comme expliqué précédemment, le faisceau lumineux redressé 20 présentant un état de polarisation redressé qui est circulaire, le réseau de diffraction à séparation de polarisation 130 diffracte en réflexion le faisceau lumineux redressé 20 dans un unique ordre de diffraction, ici l'ordre de diffraction +1, pour chaque longueur d'onde λ1, λ2, λ3 du faisceau lumineux amont 1, donnant ainsi naissance aux trois faisceaux lumineux diffractés 31, 32, 33 qui sont des faisceaux lumineux de rayons parallèles.

Toujours dans cette configuration, les moyens de focalisation 140 comprennent un deuxième miroir concave sphérique, qui est ici identique au premier miroir concave 120, dont le plan focal est situé dans le plan des moyens de détection 150.

Ainsi disposé, le deuxième miroir concave 140 focalise les faisceaux lumineux diffractés 31, 32, 33 respectivement aux trois points de focalisation 41, 42, 43 sur les moyens de détection 150.

Les moyens de détection 150 comportent dans ce premier mode de réalisation un détecteur multi-canal formé ici d'une barrette linéaire de capteurs CCD placée de telle sorte que les points de focalisation 41, 42, 43 sont alignés sur la ligne de capteurs CCD.

Les points de focalisation 41, 42, 43 sont centrés sur des capteurs CCD différents de sorte que le détecteur multi-canal 150 délivre un signal relatif à l'intensité lumineuse diffractée aux différentes longueurs d'onde λ1, λ2, λ3.

Ceci étant vrai pour toutes les longueurs d'onde appartenant au spectre du faisceau lumineux amont 1, les moyens de détection 150 mesurent alors, en fonction de la longueur d'onde, les intensités lumineuses du faisceau lumineux amont 1 pour en déduire son spectre.

Il est par ailleurs connu que la résolution spectrale (exprimée en nanomètres) d'un spectromètre est fonction de la taille des capteurs CCD et de leur espacement.

En variante, le détecteur multi-canal pourrait par exemple être formé d'une barrette de photodiodes, d'une matrice en deux dimensions de capteurs CCD ou de photodiodes.

En variante encore, les moyens de détection pourraient comporter une fente et un détecteur mono-canal. La fente présente une forme et des dimensions qui sont celles de l'image de la fente d'entrée par le système optique de collimation, le réseau de diffraction à séparation de polarisation et le système optique de focalisation. Le détecteur mono-canal est un détecteur unique, par exemple une photodiode silicium, germanium, InGaAs, InAs, InSb, PbS, PbSe, ou HgCdTe, une photodiode à avalanche, un tube photo-multiplicateur.

L'efficacité de diffraction du réseau de diffraction à séparation de polarisation 130 étant très élevée, les intensités lumineuses des faisceaux lumineux diffractés 31, 32, 33 mesurées aux points de focalisation 41, 42, 43 des moyens de détection sont très grandes, et l'analyse du spectre du faisceau lumineux amont 1 est plus aisée.

De plus, le spectromètre 100 est, relativement, moins sensible à la lumière parasite ambiante.

Il est enfin possible de n'utiliser qu'un seul réseau de diffraction à séparation de polarisation 130 pour couvrir une large bande spectrale, ce qui peut éviter d'insérer une tourelle multi-réseaux dans le spectromètre 100.

### Variante du premier mode de réalisation d'un spectromètre

On a représenté sur la figure 4 un spectromètre 100 selon une variante du premier mode de réalisation de l'invention.

Dans cette variante, le spectromètre 100 comporte des moyens de dispersion angulaire 230 qui comprennent ici trois réseaux de diffraction à séparation de polarisation 231, 232, 233.

Ces trois réseaux de diffraction à séparation de polarisation 231, 232, 233 sont conçus de manière à ce que leurs bandes spectrales se recouvrent partiellement. Par exemple, le premier réseau de diffraction à séparation de polarisation 231 couvre une bande spectrale allant de 350 nm à 1000 nm, le deuxième réseau de diffraction à séparation de polarisation 232 couvre une bande spectrale allant de 900 nm à 1800 nm, et le troisième réseau de diffraction à séparation de polarisation 233 couvre une bande spectrale allant de 1700 nm à 2500 nm.

Ceci permet, d'une part, de couvrir une bande spectrale encore plus grande, et, d'autre part, d'avoir des réseaux de diffraction à séparation de polarisation 231, 232, 233 dont l'efficacité est encore optimisée sur leur bande spectrale respective.

Les trois réseaux de diffraction à séparation de polarisation 231, 232, 233 sont en effet disposés sur les trois faces latérales d'une tourelle multi-réseaux 230A de forme triangulaire. Par rotation de cette tourelle, il est alors possible de sélectionner dans le spectromètre 100, le réseau de diffraction à séparation de polarisation 231, 232, 233 à utiliser en fonction de la bande spectrale adéquate.

En variante du premier mode de réalisation de l'invention et de sa variante représentés respectivement sur les figures 4 et 5, où le spectromètre 100 est de type « Czerny-Turner », le spectromètre pourrait par exemple comporter une pluralité d'étages dispersifs cascadés en configuration additive ou soustractive.

Selon cette variante, chacun des étages dispersifs peut comprendre un réseau de diffraction à séparation de polarisation supplémentaire identique au réseau de diffraction à séparation de polarisation des moyens de dispersion angulaire.

En cascadant plusieurs étages en configuration additive, on peut additionner les dispersions spectrales des différents étages sans dégrader la transmission globale dans le spectromètre grâce à l'utilisation des réseaux de diffraction à séparation de polarisation.

En cascadant plusieurs étages en configuration soustractive, on peut réaliser un filtre accordable extrêmement raide, tout en gardant une excellente transmission au travers du spectromètre.

### Deuxième mode de réalisation d'un spectromètre

On a représenté sur la figure 6 un spectromètre 200 selon un deuxième mode de réalisation de l'invention.

Ce spectromètre 200 comporte un composant optique hybride 260 rassemblant les moyens de dispersion angulaire et les moyens de focalisation.

Ce composant optique hybride 260 est ici formé d'un réseau de diffraction à séparation de polarisation qui fonctionne en réflexion et qui n'est pas plan mais présente une forme par exemple sphérique ou concave de sorte que le faisceau lumineux redressé 20 est simultanément diffracté et focalisé par le composant optique hybride 260 sur les moyens de détection 150.

La configuration de ce deuxième mode de réalisation est particulièrement avantageuse en termes d'encombrement et de réglage du fait du nombre réduit de composants utilisés dans ce spectromètre 200.

### Troisième mode de réalisation d'un spectromètre

On a représenté sur la figure 7 un spectromètre 300 selon un troisième mode de réalisation de l'invention.

Les moyens de collimation 320 du spectromètre 300 comprennent ici une première lentille convergente dont le plan focal est situé dans le plan de la fente de sortie 3101 des moyens de modification de la polarisation 1100 de sorte que la première lentille 320 collimate le faisceau lumineux redressé 20 sur le réseau de diffraction à séparation de polarisation 330 du spectromètre 300 qui fonctionne dans ce mode de réalisation en transmission.

Les moyens de focalisation 340 comprennent une deuxième lentille convergente dont le plan focal est sensiblement confondu avec le plan des moyens de détection 350 qui sont identiques aux moyens de détection 150 du spectromètre 100 représenté sur la figure 3.

Ainsi disposé, la deuxième lentille 340 focalise les faisceaux lumineux diffractés 31, 32, 33 respectivement aux trois points de focalisation 41, 42, 43 sur les moyens de détection 350.

En variante, et de manière avantageuse, les moyens de collimation et les moyens de focalisation pourraient par exemple comprendre des systèmes optiques complexes avec plusieurs lentilles permettant de corriger les aberrations géométriques et chromatiques sur une large bande spectrale et pour des faisceaux lumineux amont présentant une forte divergence.

On observe sur la figure 5 que l'ensemble des éléments du spectromètre 300 n'est pas aligné selon une même direction, comme par exemple celle de l'axe optique A1. Dans certaines configurations, il peut néanmoins être avantageux d'avoir un spectromètre « en ligne », par exemple pour des raisons d'encombrement, ou bien lorsqu'il s'agit de transformer une camera d'imagerie en spectromètre.

### Variante du troisième mode de réalisation d'un spectromètre

On a ainsi représenté sur la figure 8 un spectromètre 300 selon une variante du deuxième mode de réalisation de l'invention.

Les moyens de dispersion angulaire 430 comportent un prisme 431 et un réseau de diffraction à séparation de polarisation 432 identique au réseau de diffraction à séparation de polarisation 330 du spectromètre 300 représenté sur la figure 5.

Le prisme 431 est un prisme droit qui présente :
- une face d'entrée 431A perpendiculaire à l'axe optique A1 et orientée vers la première lentille 320, de sorte que les rayons du faisceau lumineux redressé 20 soient en incidence normale sur cette face d'entrée 431A du prisme 431,
- une base 431B perpendiculaire à la face d'entrée 431A, et
- une face de sortie 431C opposée et inclinée par rapport à la face d'entrée 431A et formant avec celle-ci un angle de prisme Â.

Avantageusement, les différentes faces 431A, 431B, 431C du prisme 431 sont traitées anti-reflet.

Comme cela est représenté sur la figure 6, le réseau de diffraction à séparation de polarisation 432 est placé sur la face de sortie 431C inclinée du prisme 431, accolé à celle-ci au moyen d'une colle optique.

En variante, le réseau de diffraction à séparation de polarisation pourrait par exemple être placé sur la face d'entrée du prisme, accolé à celle-ci au moyen d'une colle optique.

En variante encore, on pourrait fabriquer le réseau de diffraction à séparation de polarisation directement sur la face de sortie ou sur la face d'entrée.

L'angle de prisme Â est déterminé de telle sorte que le faisceau lumineux diffracté 32 pour une longueur d'onde λ2 située ici sensiblement au centre du spectre du faisceau lumineux amont 1 soit collimaté selon l'axe optique A1.

De cette façon, en plaçant la deuxième lentille 340 de telle sorte que son axe optique soit parallèle à l'axe optique A1, les trois points de focalisation 41, 42, 43 sont situés dans un plan perpendiculaire à cet axe optique A1. Les moyens de détection 150 sont alors alignés et centrés selon l'axe optique A1.

Ainsi, le prisme 431 introduit une déviation angulaire destinée à compenser celle introduite par le réseau de diffraction à séparation de polarisation 432 afin que les différents éléments du spectromètre 300 soient alignés selon une même direction, ici selon l'axe optique A1.

Ceci permet donc d'avoir un spectromètre « en ligne ».

Dans d'autres modes alternatifs de réalisation d'un spectromètre, les moyens de collimation et/ou les moyens de focalisation sont conçus et agencés afin de former une image de la fente de sortie des moyens de modification de la polarisation.

Dans le cas des figures 1 à 3, les moyens de modification de la polarisation 1100 sont alors tels que le premier faisceau lumineux polarisé redressé 21 et le deuxième faisceau lumineux polarisé redressé 22 sont respectivement imagés par les moyens de collimation 120 ; 320 et/ou les moyens de focalisation 140 ; 260 ; 340 en deux points distincts des moyens de détection 150, qui peuvent alors mesurer séparément leur intensités respectives.

Le premier faisceau lumineux polarisé redressé 21 et le deuxième faisceau lumineux polarisé redressé 22 présentant chacun un état de polarisation fonction de l'état de polarisation du faisceau lumineux amont 1, il est alors possible, connaissant la configuration des moyens de modification de la polarisation, d'en déduire l'état de polarisation du faisceau lumineux amont 1.

On réalise ainsi un spectropolarimètre.

### Premier mode de réalisation d'un monochromateur

On a représenté sur la figure 9 un premier monochromateur 500 comportant deux étages dispersifs 500A, 500B successifs qui sont ici cascadés en configuration soustractive.

Le monochromateur 500 comporte une fente d'entrée 101 et des moyens de modification de la polarisation 1100 identiques à ceux des spectromètres 100, 200, 300 des trois modes de réalisation d'un spectromètre précédemment décrit.

Il comporte par ailleurs des moyens de collimation 520, formés ici d'un premier miroir concave, qui permet de collimater le faisceau lumineux redressé 20 issu des moyens de modification de la polarisation 1100.

De la même manière, le monochromateur 500 comporte des moyens de focalisation 540 formés ici d'un deuxième miroir concave, identique au premier miroir concave 520, qui permet de focaliser le faisceau lumineux issu du deuxième étage dispersif 500B sur un plan image 505.

Le premier étage dispersif 500A et le deuxième étage dispersif 500B sont situés, le long du faisceau lumineux, entre le premier miroir concave 520 et le deuxième miroir concave 540.

Comme cela est représenté sur la figure 9, le premier étage dispersif 500A comporte :
- un premier réseau de diffraction à séparation de polarisation 531A fonctionnant en réflexion,
- un troisième miroir concave 502A, identique au premier miroir concave, et
- un premier miroir plan 503A.

Le premier réseau de diffraction à séparation de polarisation 531A est positionné dans le monochromateur 500 de manière à intercepter le faisceau lumineux collimaté par le premier miroir concave 520.

Le premier réseau de diffraction à séparation de polarisation 531A diffracte alors ce faisceau lumineux collimaté en fonction de la longueur d'onde en des faisceaux lumineux diffractés 31, 32.

Par souci de clarté, on n'a représenté sur la figure 9 que deux faisceaux lumineux diffractés 31, 32 respectivement diffractés aux longueurs d'onde λ1 et λ2.

Pour des raisons d'encombrement, les faisceaux lumineux diffractés 31, 32 sont ensuite repliés par réflexion sur le troisième miroir concave 502A et sur le premier miroir plan 503A.

En sortie du premier étage dispersif 500A et en amont du deuxième étage dispersif 500B, une fente de filtrage 501 est placé sur le chemin optique des faisceaux lumineux diffractés 31, 32.

Cette fente de filtrage 501 a pour fonction de filtrer spatialement les faisceaux lumineux diffractés 31, 32 et de réduire la lumière parasite se propageant dans le monochromateur.

Plus généralement, la fente de filtrage 501 peut comprendre un masque présentant une pluralité d'ouvertures permettant de sélectionner simultanément plusieurs bandes spectrales bien définies en fonction des dimensions des ouvertures et de leurs espacements respectifs.

En variante, la fente de filtrage pourrait comprendre un autre type de masque présentant une pluralité d'ouvertures permettant de réaliser une fonction de filtre spectral éventuellement complexe.

De manière analogue au premier étage dispersif 500A, le deuxième étage dispersif 500B comporte :
- un deuxième miroir plan 503B,
- un quatrième miroir concave 502B, identique au troisième miroir concave, et
- un deuxième réseau de diffraction à séparation de polarisation 531 B, identique au premier et fonctionnant également en transmission,

Le deuxième miroir plan 503B réfléchit les faisceaux lumineux diffractés 31, 32 filtrés par la fente de filtrage 501 en direction du quatrième miroir concave 502B, celui-ci repliant les faisceaux lumineux diffractés 31, 32 pour les diriger vers le deuxième réseau de diffraction à séparation de polarisation 531 B.

Le deuxième réseau de diffraction à séparation de polarisation 531 B diffracte alors une deuxième fois les faisceaux lumineux diffractés 31, 32.

Comme évoqué plus haut, selon ce premier mode de réalisation d'un monochromateur, les deux étages dispersifs 500A, 500B sont ici en configuration soustractive.

Ceci signifie que le monochromateur 500 est configuré de telle sorte que le deuxième étage dispersif 500B compense la dispersion du premier étage dispersif 500A.

En particulier, ici, le deuxième réseau de diffraction à séparation de polarisation 531B est orienté de telle sorte que les faisceaux lumineux diffractés 31, 32 incidents sur ce deuxième réseau de diffraction à séparation de polarisation 531B sont superposés après diffraction en réflexion sur le deuxième réseau de diffraction à séparation de polarisation 531B et forment un faisceau lumineux émergent 20A qui est un faisceau collimaté.

Pour cela, l'orientation du deuxième réseau de diffraction à séparation de polarisation 531B est ici obtenue par rotation de 180° du premier réseau de diffraction à séparation de polarisation 531A autour de l'axe optique A1 des moyens de modification de la polarisation 1100.

Ainsi, le faisceau lumineux issu du deuxième étage dispersif 500A peut être ensuite focalisé par les moyens de focalisation 540 sur le plan image 505.

### Variante du premier mode de réalisation d'un monochromateur

On a représenté sur la figure 10 une variante du premier monochromateur 500 comportant deux étages dispersifs 500A, 500B successifs qui sont ici cascadés en configuration additive.

Cette variante comporte les mêmes éléments que le monochromateur 500 de la figure 9.

En revanche, la configuration de la variante du premier monochromateur 500 est telle que l'orientation du premier réseau de diffraction à séparation de polarisation 531A est identique à celle du deuxième réseau de diffraction à séparation de polarisation 531B.

Dans ces conditions, le deuxième réseau de diffraction à séparation de polarisation 531B ne compense plus la diffraction par le premier réseau de diffraction à séparation de polarisation 531A mais, au contraire, double la dispersion des faisceaux lumineux diffractés 31, 32 de sorte qu'ils sont séparés en sortie du deuxième étage dispersif 500B.

Le deuxième miroir concave 540 focalise alors les faisceaux lumineux diffractés 31, 32 en deux points de focalisation distincts du plan image 505.

### Deuxième mode de réalisation d'un monochromateur

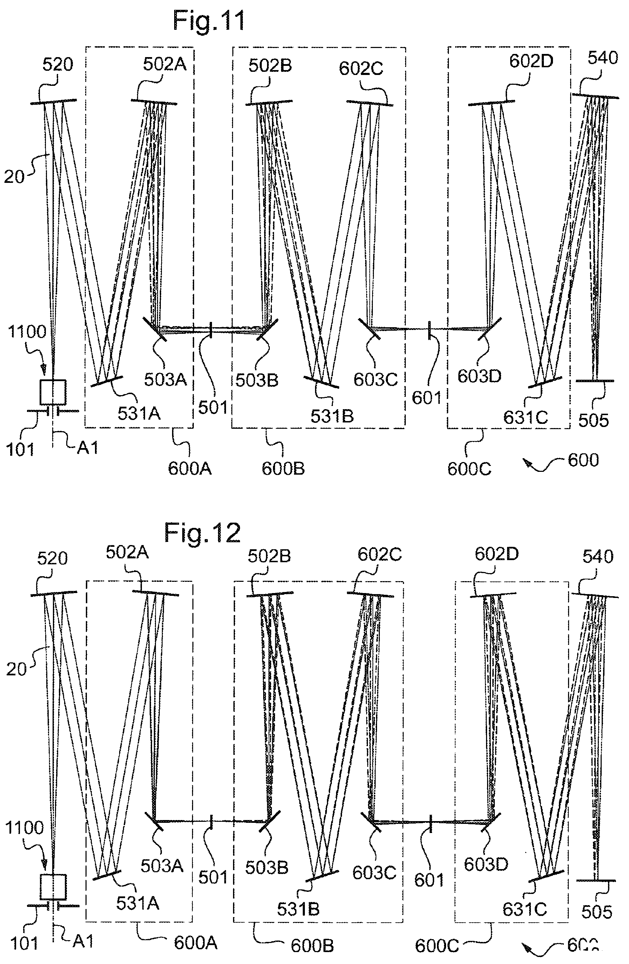

On a représenté sur la figure 11 un deuxième mode de réalisation d'un monochromateur 600 comportant trois étages dispersifs successifs :
- un premier étage dispersif 600A et un deuxième étage dispersif 600B cascadés en configuration soustractive, et
- un troisième étage dispersif 600C simple.

Dans ce deuxième mode de réalisation, les différents éléments situés en amont ou en aval des différents étages dispersifs sont identiques aux éléments du premier mode de réalisation d'un monochromateur 500 représenté sur la figure 9.

De manière analogue, le premier étage dispersif 600A est identique au premier étage dispersif 500A du premier mode de réalisation d'un monochromateur.

Le deuxième étage dispersif 600B comporte non seulement tous les éléments du deuxième étage dispersif 500B du premier mode de réalisation du monochromateur 500, mais aussi un cinquième miroir concave 602C et un quatrième miroir plan 603C.

Le premier étage dispersif 600A et le deuxième étage dispersif 600B étant cascadés en configuration soustractive, le faisceau obtenu par diffraction sur le deuxième réseau de diffraction à séparation de polarisation 531B est le le faisceau lumineux émergent collimaté 20A.

Comme dans le premier étage dispersif 600A, ce faisceau lumineux émergent collimaté 20A est replié par le cinquième miroir concave puis réfléchi par le troisième miroir plan 603C.

Il traverse alors une seconde fente de filtrage 601 située le long du chemin optique, entre le deuxième étage dispersif 600B et le troisième étage dispersif 600C.

Le troisième étage dispersif 600C est un étage dispersif classique qui comprend ici un cinquième miroir plan 603D, un sixième miroir concave 602D et un réseau de diffraction à traits 631C pouvant présenter un très fort pouvoir dispersif.

En variante, le troisième étage dispersif pourrait par exemple comporter un réseau de diffraction à séparation de polarisation, qui serait alors identique au premier réseau de diffraction.

L'intérêt d'un monochromateur tel que celui représenté sur la figure 11 est de proposer un monochromateur qui disperse dans le plan image 505 une petite bande spectrale avec la même dispersion que dans le plan de la fente de filtrage 501 (si les focales des étages sont les mêmes), mais avec un taux de lumière parasite bien inférieur, du fait du double filtrage dans le plan de la fente de filtrage 501 et dans le plan de la seconde fente de filtrage 601.

### Variante du deuxième mode de réalisation d'un monochromateur

On a représenté sur la figure 12 une variante du deuxième monochromateur 600 comportant :
- deux étages dispersifs 600A, 600B successifs qui sont ici cascadés en configuration additive, et
- un troisième étage dispersif 600C identique à celui du monochromateur 600 représenté sur la figure 11.

L'intérêt d'un monochromateur selon la variante représentée sur la figure 12 est de proposer un monochromateur qui additionne les dispersions des trois étages, et permet d'atteindre de grandes dispersion avec un taux de lumière parasite très faible, beaucoup plus faible que ce que l'on aurait en utilisant un seul étage trois fois plus dispersif.

## Revendications

1. Spectromètre (100 ; 200 ; 300 ; 500 ; 600) pour l'analyse du spectre d'un faisceau lumineux amont (1) comportant :
- une fente d'entrée (101) adaptée à laisser traverser le faisceau lumineux amont (1),
- des moyens de dispersion angulaire (130 ; 230 ; 260 ; 330 ; 430 ; 500A, 500B ; 600A, 600B, 600C), adaptés à disperser angulairement un faisceau lumineux redressé (20) en fonction d'une pluralité de longueurs d'onde (λ1, λ2, λ3) en une pluralité de faisceaux lumineux diffractés (31, 32, 33),
**caractérisé en ce que** lesdits moyens de dispersion angulaire (130, 230 ; 260 ; 330 ; 430 ; 500A, 500B ; 600A, 600B) comprennent au moins un réseau de diffraction à séparation de polarisation (130 ; 231, 232, 233 ; 330 ; 432 ;531A, 531 B) qui est adapté, pour ladite pluralité de longueurs d'onde (λ1, λ2, λ3), à diffracter ledit faisceau lumineux redressé (20) en la pluralité de faisceaux lumineux diffractés (31, 32, 33) dans un même ordre de diffraction particulier dudit réseau de diffraction à séparation de polarisation (130 ; 231, 232, 233 ; 330 ; 432 ;531 A, 531 B) qui est soit l'ordre de diffraction +1, soit l'ordre de diffraction -1, lorsque ledit faisceau lumineux redressé (20) présente un état de polarisation redressé prédéterminé qui est circulaire,
et **en ce que** ledit spectromètre (100 ; 200 ; 300 ; 500 ; 600) comporte en outre des moyens de modification de la polarisation (1100) disposés entre ladite fente d'entrée (101) et lesdits moyens de dispersion angulaire (130, 230 ; 260 ; 330 ; 430 ; 500A, 500B ; 600A, 600B), et adaptés, pour ladite pluralité de longueurs d'onde (λ1 , λ2, λ3), à modifier l'état de polarisation dudit faisceau lumineux amont (1) pour générer ledit faisceau lumineux redressé (20) selon l'état de polarisation redressé prédéterminé, lesdits moyens de modification de la polarisation (1100) comprenant :
- des moyens de séparation de la polarisation (1110) adaptés, pour ladite pluralité de longueurs d'onde (λ1, λ2, λ3), à générer, à partir dudit faisceau lumineux amont (1), un premier faisceau lumineux séparé (11) et un deuxième faisceau lumineux séparé (12) qui présentent des états de polarisation orthogonaux entre eux, et
- des moyens de redressement de la polarisation (1120) adaptés, pour ladite pluralité de longueurs d'onde (λ1, λ2, λ3), à générer un premier faisceau lumineux polarisé redressé (21) à partir dudit premier faisceau lumineux séparé (11) et un deuxième faisceau lumineux polarisé redressé (22) à partir dudit deuxième faisceau lumineux séparé (12), ledit premier faisceau lumineux polarisé redressé (21) et ledit deuxième faisceau lumineux polarisé redressé (22) présentant un même état de polarisation qui est circulaire, ledit premier faisceau lumineux polarisé redressé (21) et ledit deuxième faisceau lumineux polarisé redressé (22) formant ledit faisceau lumineux redressé (20) présentant ledit même état de polarisation circulaire.

2. Spectromètre (100 ; 200 ; 300) selon la revendication 1, comportant des moyens de détection (150) adaptés à mesurer l'intensité lumineuse de ladite pluralité de faisceaux lumineux diffractés (31, 32, 33) pour chaque longueur d'onde de ladite pluralité de longueurs d'onde (λ1, λ2, λ3), et à délivrer un signal représentatif dudit spectre du faisceau lumineux amont (1),

3. Spectromètre (100 ; 200; 300; 500; 600) selon la revendication 1 ou 2 comportant des moyens de focalisation (140 ; 260 ; 340 ; 540) de ladite pluralité de faisceaux lumineux diffractés (31, 32, 33) angulairement en fonction de ladite pluralité de longueurs d'onde (λ1, λ2, λ3), lesdits moyens de focalisation (140 ; 260 ; 340 ; 540) étant adaptés à focaliser, pour chaque longueur d'onde de ladite pluralité de longueurs d'onde (λ1, λ2, λ3), ladite pluralité de faisceaux lumineux diffractés (31, 32, 33) sur un plan image (505, 605) ou sur lesdits moyens de détection (150).

4. Spectromètre (100 ; 200 ; 300 ; 500 ; 600) selon l'une des revendications 1 à 3, dans lequel lesdits moyens de redressement de la polarisation (1120) comprennent :
- un premier composant optique redresseur de la polarisation (1121) adapté, pour ladite pluralité de longueurs d'onde (λ1, λ2, λ3), à générer ledit premier faisceau lumineux polarisé redressé (21) à partir dudit premier faisceau lumineux séparé (11) à ladite pluralité de longueurs d'onde, et
- un deuxième composant optique redresseur de la polarisation (1122) adapté, pour la pluralité de longueurs d'onde (λ1, λ2, λ3), à générer ledit deuxième faisceau lumineux polarisé redressé (22) à partir dudit deuxième faisceau lumineux séparé (12) à ladite pluralité de longueurs d'onde.

5. Spectromètre (100 ; 200 ; 300 ; 500 ; 600) selon l'une des revendications 1 à 4, dans lequel lesdits moyens de séparation de la polarisation (1110) comprennent :
- un premier système optique (1111) adapté à intercepter en entrée ledit faisceau lumineux amont (1) pour le diriger en sortie vers au moins un composant optique séparateur de polarisation (1113) qui est adapté, pour ladite pluralité de longueurs d'onde (λ1, λ2, λ3), à générer, à partir dudit faisceau lumineux amont (1), ledit premier faisceau lumineux séparé (11) et ledit deuxième faisceau lumineux séparé (12).

6. Spectromètre (100 ; 200 ; 300 ; 500 ; 600) selon la revendication 5, dans lequel :
- ledit premier système optique (1111) est agencé de manière à ce que les rayons lumineux dudit faisceau lumineux amont (1) soient tous parallèles entre eux à la sortie dudit premier système optique (1111), et dans lequel
- lesdits moyens de séparation de la polarisation (1110) comprennent également un deuxième système optique (1112) adapté, pour ladite pluralité de longueurs d'onde (λ1, λ2, λ3), à intercepter en entrée, d'une part, ledit premier faisceau lumineux séparé (11) pour le focaliser sur ledit premier composant optique redresseur de la polarisation (1121) et, d'autre part, ledit deuxième faisceau lumineux séparé (12) pour le focaliser sur ledit deuxième composant optique redresseur de la polarisation (1122).

7. Spectromètre (100 ; 200 ; 300 ; 500 ; 600) selon la revendication 5 ou 6, dans lequel :
- ledit composant optique séparateur de polarisation (1113) comprend un prisme de Wollaston, un prisme de Rochon, un prisme de Sénarmont, ou un prisme à décalage de faisceau, configuré de manière à ce que ledit premier faisceau lumineux séparé (11) et ledit deuxième faisceau lumineux séparé (12) présentent des états de polarisation linéaires orthogonaux entre eux, et
- ledit premier composant optique redresseur de la polarisation (1121) comprend une première lame à retard quart d'onde présentant un premier axe lent et ledit deuxième composant optique redresseur de la polarisation (1122) comprend une deuxième lame à retard quart d'onde présentant un second axe lent perpendiculaire au premier axe lent.

8. Spectromètre (100 ; 200 ; 300 ; 500 ; 600) selon la revendication 5 ou 6, dans lequel :
- ledit composant optique séparateur de polarisation (1113) comprend un autre réseau de diffraction à séparation de polarisation adapté, pour ladite pluralité de longueurs d'onde (λ1, λ2, λ3), à diffracter ledit faisceau lumineux amont (1) en :
- ledit premier faisceau lumineux séparé (11) qui est diffracté dans un premier ordre de diffraction qui est soit l'ordre de diffraction +1, soit l'ordre de diffraction -1 de l'autre réseau de diffraction à séparation de polarisation (1113), et qui présente un premier état de polarisation circulaire, et en
- ledit deuxième faisceau lumineux séparé (12) qui est diffracté dans un deuxième ordre de diffraction qui est soit l'ordre de diffraction +1, soit l'ordre de diffraction -1 de l'autre réseau de diffraction à séparation de polarisation (1113), ledit deuxième ordre de diffraction étant différent du premier ordre de diffraction, et qui présente un deuxième état de polarisation circulaire orthogonal audit premier état de polarisation, et dans lequel
- ledit premier composant optique redresseur de la polarisation(1121) comprend une lame à retard demi-onde disposée de manière à inverser l'état de polarisation dudit premier faisceau lumineux séparé (11), et ledit deuxième élément optique redresseur de la polarisation (1122) comprend une lame neutre à faces parallèles adaptée pour conserver l'état de polarisation dudit deuxième faisceau lumineux séparé (12).

9. Spectromètre (500 ; 600) selon l'une des revendications 1 à 8, comportant une pluralité d'étages dispersifs (500A, 500B ; 600A, 600B, 600C) cascadés en configuration additive ou soustractive.

10. Spectromètre (300) selon l'une des revendications 1 à 9, dans lequel lesdits moyens de dispersion angulaire (430) comprennent un prisme (431) présentant une face d'entrée (431 A) qui intercepte ledit faisceau lumineux redressé (20) et une face de sortie (431 C) sur laquelle est disposé ledit réseau de diffraction à séparation de polarisation (432).

11. Spectromètre (100 ; 200 ; 300) selon l'une des revendications 1 à 10, dans lequel lesdits moyens de détection (150) comprennent un détecteur multi-canal.

12. Spectromètre selon l'une des revendications 1 à 10, dans lequel lesdits moyens de détection comprennent une fente et un détecteur mono-canal.

## Patentansprüche

1. Spektrometer (100; 200; 300; 500; 600) zur Analyse des Spektrums eines ankommenden Lichtstrahlbündels (1), das
- einen Eingangsspalt 101), der dazu ausgelegt ist, das ankommende Lichtstrahlbündel (1) durchzulassen,
- Mittel zur winkelmäßigen Streuung (130; 230; 260; 330; 430; 500A, 500B; 600A, 600B, 600C), die dazu ausgelegt sind, ein in Abhängigkeit von einer Mehrzahl von Wellenlängen (λ1, λ2, λ3) ausgerichtetes Lichtstrahlbündel (20) winkelmäßig in eine Mehrzahl gebrochener Lichtstrahlbündel (31, 32, 33) zu streuen,
**dadurch gekennzeichnet, daß** die Mittel zur winkelmäßigen Streuung (130; 230; 260; 330; 430; 500A, 500B; 600A, 600B, 600C) wenigstens ein Polarisationsstreugitter (130; 231, 232, 233; 330; 432; 531A, 531B) aufweisen, das für die Mehrzahl von Wellenlängen (λ1, λ2, λ3) dazu ausgelegt ist, das ausgerichtete Lichtstrahlbündel (20) in einer selben eigenen Beugungsordnung des Polarisationsstreugitters (130; 231, 232, 233; 330; 432; 531A, 531B), die entweder die Beugungsordnung +1 oder die Beugungsordnutlg -1 ist, in die Mehrzahl gebrochener Lichtstrahlbündel (31, 32, 33) zu streuen, wenn das ausgerichtete Lichtstrahlbündel (20) einen vorbestimmten ausgerichteten Polarisationszustand aufweist, der zirkular ist,
und daß das Spektrometer (100; 200; 300; 500; 600) außerdem Mittel zur Änderung der Polarisation (1100) aufweist, die zwischen dem Eingangsspalt (101) und den Mitteln zur winkelmäßigen Streuung (130; 230; 260; 330; 430; 500A, 500B; 600A, 600B) angeordnet und für die Mehrzahl von Wellenlängen (λ1, λ2, λ,3) dazu ausgelegt sind, den Polarisationszustand des ankommenden Lichtstrahlbündels (1) zu ändern, um das ausgerichtete Lichtstrahlbündel (20) gemäß dem vorbestimmten ausgerichteten Polarisationszustand zu erzeugen, wobei die Mittel zur Änderung der Polarisation (1100)
- Mittel zur Trennung der Polarisation (1110), die für die Mehrzahl von Wellenlängen (λ1, λ2, λ3) dazu ausgelegt sind, vom ankommenden Lichtstrahlbündel (1) ausgehend, ein erstes separates Lichtstrahlbündel (11) und ein zweites separates Lichtstrahlbündel (12) zu erzeugen, die zueinander orthogonale Polarisationszustände aufweisen, und
- Mittel zum Ausrichten der Polarisation (1120), die für die Mehrzahl von Wellenlängen (λ1, λ2, λ3) dazu ausgelegt sind, ein erstes ausgerichtetes polarisiertes Lichtstrahlbündel (21) aus dem ersten separaten Lichtstrahlbündel (11) und ein zweites ausgerichtetes polarisiertes Lichtstrahlbündel (22) aus dem zweiten separaten Lichtstrahlbündel (12) zu erzeugen, wobei das erste ausgerichtete polarisierte Lichtstrahlbündel (21) und das zweite ausgerichtete polarisierte Lichtstrahlbündel (22) einen selben Polarisationszustand, und zwar einen zirkularen, aufweisen, wobei das erste ausgerichtete polarisierte Lichtstrahlbündel (21) und das zweite ausgerichtete polarisierte Lichtstrahlbündel (22) das ausgerichtete Lichtstrahlbündel (20) bilden, das denselben zirkulären Polarisationszustalid hat,
aufweisen.

2. Spektrometer (100; 200; 300) gemäß Anspruch 1, das Erfassungsmittel (150) aufweist, die dazu ausgelegt sind, die Lichtstärke der Mehrzahl gebrochener Lichtstrahlbündel (31, 32, 33) für jede Wellenlänge der Mehrzahl von Wellenlängen (λ1, λ2, λ3) zu messen und ein für das Spektrum des ankommenden Lichtstrahlbündels (1) repräsentatives Signal zu liefern.

3. Spektrometer (100; 200; 300; 500; 600) gemäß Anspruch 1 oder 2, das Mittel zum Fokussieren (140; 260; 340; 540) der in Abhängigkeit von der Mehrzahl von Wellenlängen (λ1, λ2, λ3) winkelmäßig gebrochenen Lichtstrahlbündel (31, 32, 33) aufweist, wobei die Mittel zum Fokussieren (140; 260; 340; 540) dazu ausgelegt sind, die Mehrzahl gebrochener Lichtstrahlbündel (31, 32, 33) für jede Wellenlänge der Mehrzahl von Wellenlängen (λ1, λ2, λ3) auf eine Bildebene (505, 605) oder auf die Erfassungsmittel (150) zu fokussieren.

4. Spektrometer (100; 200; 300; 500; 600) gemäß einem der Ansprüche 1 bis 3, bei dem die Mittel zum Ausrichten der Polarisation (1120)
- ein erstes optisches Bauelement zum Ausrichten der Polarisation (1121), das für die Mehrzahl von Wellenlängen (λ1, λ2, λ3) dazu ausgelegt ist, das erste ausgerichtete polarisierte Lichtstrahlbündel (21) aus dem ersten separaten Lichtstrahlbündel (11) bei der besagten Mehrzahl von Wellenlängen zu erzeugen, und
- ein zweites optisches Bauelement zum Ausrichten der Polarisation (1122), das für die Mehrzahl von Wellenlängen (λ1, λ2, λ3) dazu ausgelegt ist, das zweite ausgerichtete polarisierte Lichtstrahlbündel (22) aus dem zweiten separaten Lichtstrahlbündel (12) zu erzeugen,
aufweisen.

5. Spektrometer (100; 200; 300; 500; 600) gemäß einem der Ansprüche 1 bis 4, bei dem die Mittel zur Trennung der Polarisation (1110)
- ein erstes optisches System (1111) aufweisen, das dazu ausgelegt ist, das ankommende Lichtstrahlbündel (1) am Eingang einzufangen, um es am Ausgang auf wenigstens ein optisches Bauelement zum Trennen der Polarisation (1113) zu richten, das für die Mehrzahl von Wellenlängen (λ1, λ2, λ3) dazu ausgelegt ist, aus dem ankommenden Lichtstrahlbündel (1) das erste separate Lichtstrahlbündel (11) und das zweite separate Lichtstrahlbündel (12) zu erzeugen.

6. Spektrometer (100; 200; 300; 500; 600) gemäß Anspruch 5, bei dem
- das erste optische System (1111) so ausgebildet ist, daß die Lichtstrahlen des ankommenden Lichtstrahlbündels (1) am Ausgang des ersten optischen Systems (1111) alle untereinander parallel sind, und bei dem
- die Mittel zur Trennung der Polarisation (1110) außerdem ein zweites optisches System (1112) ausweisen, das dazu ausgelegt ist, für die Mehrzahl von Wellenlängen (λ1, λ2, λ3) am Eingang einerseits das erste separate Lichtstrahlbündel (11) einzufangen, um es auf das erste optische Bauelement zum Ausrichten der Polarisation (1121) zu fokussieren, und andererseits das zweite separate Lichtstrahlbündel (12) einzufangen, um es auf das zweite optische Bauelement zum Ausrichten der Polarisation (1122) zu fokussieren.

7. Spektrometer (100; 200; 300; 500; 600) gemäß Anspruch 5 oder 6, bei dem
- das optische Bauelement zum Trennen der Polarisation (1113) ein Wollastonprisma, ein Rochonprisma, ein Senarmontprisma oder ein Strahlenbündelverschiebungsprisma aufweist, das so ausgelegt ist, daß das erste separate Lichtstrahlbündel (11) und das zweite separate Lichtstrahlbündel (12) lineare, zueinander orthogonale Polarisationszustände aufweisen, und
- das erste optische Bauelement zum Ausrichten der Polarisation (1121) eine erste Platte für eine Verzögerung um eine Viertelwellenlänge mit einer langsamen Achse und das zweite optische Bauelement zum Ausrichten der Polarisation (1122) eine zweite Platte für eine Verzögerung um eine Viertelwellenlänge mit einer zur ersten langsamen Achse senkrechten zweiten langsamen Achse aufweist.

8. Spektrometer (100; 200; 300; 500; 600) gemäß Anspruch 5 oder 6, bei dem
- das optische Bauelement zum Trennen der Polarisation (1113) ein weiteres Beugungsgitter mit Polarisationstrennung aufweist, das für die Mehrzahl von Wellenlängen (λ1, λ2, λ3) dazu ausgelegt ist, das ankommende Lichtstrahlbündel (1)
- in das erste separate Lichtstrahlbündel (11), das in einer ersten Beugungsordnung gebeugt ist, die entweder die Beugungsordnung +1 oder die Beugungsordnung -1 des anderen Beugungsgitters mit Trennung der Polarisation (1113) ist, und das einen ersten zirkularen Polarisationszustand aufweist, und
- in das zweite separate Lichtstrahlbündel (12), das in einer zweiten Beugungsordnung gebeugt ist, die entweder die Beugungsordnung +1 oder die Beugungsordnung -1 des anderen Beugungsgitters mit Trennung der Polarisation (1113) ist, und das einen zum ersten zirkularen Polarisationszustand orthogonalen zweiten zirkularen Polarisationszustand aufweist, zu beugen, und bei dem
- das erste optische Bauelement zum Ausrichten der Polarisation (1121) eine Platte für eine Verzögerung um eine halbe Wellenlänge aufweist, die so angeordnet ist, daß der Polarisationszustand des ersten separaten Lichtstrahlbündels (11) umgekehrt wird, und das zweite optische Bauelement zum Ausrichten der Polarisation (1122) eine neutrale Platte mit parallelen Flächen aufweist, die dazu ausgelegt ist, den Polarisationszustand des zweiten separaten Lichtstrahlbündels (12) zu erhalten.

9. Spektrometer (500; 600) gemäß einem der Ansprüche 1 bis 8, das eine Mehrzahl von in additiver oder subtraktiver Konfiguration aufeinanderfolgend angeordneter Streustufen (500A, 500B; 600A, 600B, 600C) aufweist.

10. Spektrometer (300) gemäß einem der Ansprüche 1 bis 9, bei dem die winkelmäßigen Streumittel (430) ein Prisma (431) aufweisen, das eine Eingangsfläche (431A), die das ausgerichtete Lichtstrahlbündel (20) einfängt, und eine Ausgangsfläche (431C), auf der das Beugungsgitter mit Polarisationstrennung (432) angeordnet ist, aufweist.

11. Spektrometer (100; 200; 300) gemäß einem der Ansprüche 1 bis 10, bei dem die Erfassungsmittel (150) einen Mehrkanaldetektor aufweisen.

12. Spektrometer gemäß einem der Ansprüche 1 bis 10, bei dem die Erfassungsmittel einen Spalt und einen Einkanaldetektor aufweisen.

## Claims

1. A spectrometer (100; 200; 300; 500; 600) for analysing the spectrum of an upstream light beam (1) including:
- an entrance slit (101) adapted to let the upstream light beam (1) through,
- angular dispersion means (130; 230; 260; 33D; 430; 500A, 500B; 600A, 600B, 600C), adapted to angularly disperse a rectified light beam (20) as a function of a plurality of wavelengths (λ1, λ2, λ3) into a plurality of diffracted light beams (31, 32, 33);
**characterized in that** said angular dispersion means (130, 230; 260; 330; 430; 500A, 500B; 600A, 600B) comprise at least one polarization-separation diffraction grating (130; 231, 232, 233; 330; 432; 531A, 531B) that is adapted, for said plurality of wavelengths (λ1, λ2, λ3), to diffract said rectified light beam (20) into the plurality of diffracted light beams (31, 32, 33) in a same particular diffraction order of said polarization-separation diffraction grating (130; 231, 232, 233; 330; 432; 531A, 531B), which is either the diffraction order +1, of the diffraction order -1, when said rectified light beam (20) has a predetermined rectified polarization state that is circular,
and **in that** said spectrometer (100; 200; 300; 500; 600) further includes polarization-modification means (1100) arranged between said entrance slit (101) and said angular dispersion means (130, 230; 260; 330; 430; 500A, 500B; 600A, 600B), and adapted, for said plurality of wavelengths (λ1, λ2, λ3), to modify the polarization state of said upstream light beam (1) to generate said rectified light beam (20) according to the predetermined rectified polarization state, said polarization-modification means (1100) comprising:
- polarization-separation means (1110) adapted, for said plurality of wavelengths (λ1, λ2, λ3), to generate, from said upstream light beam (1), a first separated light beam (11) and a second separated light beam (12) that have polarization states that are orthogonal to each other, and
- polarization-rectification means (1120) adapted, for said plurality of wavelengths (λ1, λ2, λ3), to generate a first rectified polarized light beam (21) from said first separated light beam (11) and a second rectified polarized light beam (22) from said second separated light beam (12), said first rectified polarized light beam (21) and said second rectified polarized light beam (22) having a same polarization state that is circular, said first rectified polarized light beam (21) and said second rectified polarized light beam (22) forming said rectified light beam (20) having said same circular polarization state.

2. The spectrometer (100; 200; 300) according to claim 1, including detection means (150) adapted to measure the light intensity of said plurality of diffracted light beams (31, 32, 33) for each wavelength of the said plurality of wavelengths (λ1, λ2, λ3), and to deliver a signal representative of said spectrum of the upstream light beam (1).

3. The spectrometer (100; 200; 300; 500; 600) according to claim 1 or 2, including focussing means (140; 260; 340; 540) of said plurality of diffracted light beams (31, 32, 33) angularly diffracted according to said plurality of wavelengths (λ1, λ2, λ3), said focussing means (140; 260; 340; 540) being adapted to focus, for each wavelength of said plurality of wavelengths (λ1, λ2, λ3), said plurality of diffracted light beams (31, 32, 33) on an image plane (505, 605) or on said detection means (150).

4. The spectrometer (100; 200; 300; 500; 600) according to one of claims 1 to 3, wherein said polarization-rectification means (1120) comprise:
- a first optical polarization-rectifier component (1121) adapted, for said plurality of wavelengths (λ1, λ2, λ3), to generate said first rectified polarized light beam (21) from said first separated light beam (11) at said plurality of wavelengths, and
- a second optical polarization-rectifier component (1122) adapted, for the plurality of wavelengths (λ1, λ2, λ3), to generate said second rectified polarized light beam (22) from said second separated light beam (12) at said plurality of wavelengths.

5. The spectrometer (100; 200; 300; 500; 600) according to one of claims 1 to 4, wherein said polarization-separation means (1110) comprise:
- a first optical system (1111) adapted to intercept at the entrance said upstream light beam (1) to direct it at the exit towards at least one optical polarization-separator component (1113) that is adapted, for said plurality of wavelengths (λ1, λ2, λ3), to generate, from said upstream light beam (1), said first separated light beam (11) and said second separated light beam (12).

6. The spectrometer (100; 200; 300; 500; 600) according to claim 5, wherein:
- said first optical system (1111) is arranged so that the light rays of said upstream light beam (1) are all parallel to each other at the exit of said first optical system (1111), and in which
- said polarization-separation means (1110) also comprise a second optical system (1112) adapted, for said plurality of wavelengths (λ1, λ2, λ3), to intercept at the entrance, on the one hand, said first separated light beam (11) to focus it on said first optical polarization-rectifier component (1121) and, on the other hand, said second separated light beam (12) to focus it on said second optical polarization-rectifier component (1122).

7. The spectrometer (100; 200; 300; 500; 600) according to claim 5 or 6, wherein:
- said optical polarization-separator component (1113) comprises a Wollaston prism, a Rochon prism, a Sénarmont prism, or a beam-displacer prism, configured so that said first separated light beam (11) and said second separated light beam (12) have linear polarization states that are orthogonal to each other, and
- said first optical polarization-rectifier component (1121) comprises a first quarter-wave retardation plate having a first slow axis and said second optical polarization-rectifier component (1122) comprises a second quarter-wave retardation plate having a second slow axis perpendicular to said first slow axis.

8. The spectrometer (100; 200; 300; 500; 600) according to claim 5 or 6, wherein:
- said optical polarization-separator component (1113) comprises another polarization-separation diffraction grating adapted, for said plurality of wavelengths (λ1, λ2, λ3), to diffract said upstream light beam (1) into:
- said first separated light beam (11) that is diffracted in a first diffraction order, which is either the diffraction order +1 or the diffraction order -1, of said other polarization-separation diffraction grating (1113), and which has a first circular polarization state, and into
- said second separated light beam (12) that is diffracted in a second diffraction order, which is either the diffraction order +1 or the diffraction order -1, of said other polarization-separation diffraction grating (1113), said second diffraction order being different from the first diffraction order, and which has a second circular polarization state orthogonal to said first polarization state, and wherein
- said first optical polarization-rectifier component (1121) comprises a half-wave retardation plate arranged so at to reverse the polarization state of said first separated light beam (11), and said second optical polarization-rectifier component (1122) comprises a parallel-face neutral plate adapted to keep the polarization state of said second separated light beam (12).

9. The spectrometer (500; 600) according to one of claims 1 to 8, including a plurality of dispersive stages (500A, 500B ; 600A, 600B, 600C) cascaded in additive or subtractive configuration.

10. The spectrometer (300) according to one of claims 1 to 9, wherein said angular dispersion means (430) comprise a prism (431) having an entrance face (431 A) that intercepts said rectified light beam (20) and an exit face (431 C) on which is arranged said polarization-separation diffraction grating (432).

11. The spectrometer (100; 200; 300) according to one of claims 1 to 10, wherein said detection means (150) comprise a multi-channel detector.

12. The spectrometer according to one of claims 1 to 10, wherein said detection means comprise a slit and a single-channel detector.
